# EUROPÄISCHE PATENTSCHRIFT

(11) **EP 0 988 173 B1**
(45) Veröffentlichungstag und Bekanntmachung des Hinweises auf die Patenterteilung: **19.09.2001**
(21) Anmeldenummer: 98936338.7
(22) Anmeldetag: 15.06.1998
(51) Int. Cl.: B60P 1/48, F15B 11/028, F15B 15/28

(54) **SCHWERLASTFAHRZEUG MIT ÜBERLASTSICHERUNG**
HEAVY GOODS VEHICLE WITH AN OVERLOAD SECURITY DEVICE
VEHICULE POUR CHARGES LOURDES AVEC DISPOSITIF DE SECURITE ANTISURCHARGE

(30) Priorität: 15.06.1997 DE 19726614; 20.10.1997 DE 19747869
(43) Veröffentlichungstag der Anmeldung: 29.03.2000
(73) Patentinhaber: KIROW Leipzig KE Kranbau Eberswalde AG, 04179 Leipzig (DE)
(72) Erfinder: RIEGER, Thomas, D-89186 Illerrieden (DE); ROSENBERG, Peter, D-89231 Neu-Ulm (DE)
(74) Vertreter: Effert, Bressel und Kollegen
(86) Internationale Anmeldenummer: EP9803577
(87) Internationale Veröffentlichungsnummer: WO9857821

(56) Entgegenhaltungen:
- EP-A- 0 300 813
- EP-A- 0 340 402
- DE-A- 3 426 310
- GB-A- 2 171 385
- US-A- 3 446 378
- US-A- 4 742 194
- US-A- 4 906 977
- US-A- 5 305 680

## Beschreibung

Die Erfindung betrifft ein Schwerlastfahrzeug mit einer Greifeinrichtung zum Aufnehmen und Bewegen eines standardisierten Lastträgers, welcher durch Hydraulikzylinder betätigbar ist und eine während des Bewegens des Lastträgers wirkende Kippsicherung für das Fahrzeug.

Ein gattungsgemäßes Fahrzeug ist aus der DE 36 05 665 C2 bekannt. Es dient zum Anheben, Transportieren und Kippen eines mit seitlichen Drehzapfen versehenen Schlackebehälters oder dergleichen und ist mit einer selbstangetriebenen Zugmaschine und einem mit Rädern versehenen Lasttransportteil ausgestattet, auf dem ein Schwinggestell schwenkbar am hinteren Ende des Lastteiles montiert ist, welches dazu dient, die Drehzapfen zu ergreifen und den Behälter auf zunehmen. Das Schwinggestell wird mit einem Hydraulikzylinder bewegt, der verschiedene Stellungen zum Aufnehmen bzw. Entleeren und Absetzen des Behälters einnimmt..

Damit das Fahrzeug durch das über das Heck zu schwenkende Schlackegefäß keinen unzulässigen Kippmomenten oder Belastungsmomenten für das Fahrgestell ausgesetzt wird, ist am Fahrzeugende ein hydraulisch ausfahrbarer Auslegerfuß angeordnet, der sich auf dem Boden aufstützen kann, wenn der Behälter mit dem Schwinggestell angehoben oder entleert wird. Weitergehende Sicherungseinrichtungen sind nicht offenbart

Aus der Praxis sind Straßenfahrzeuge bekannt, mit denen ebenfalls mit einer Heckschwenkvorrichtung, zum Beispiel Schuttcontainer aufgenommen und auf eine Plattform des Wagens gestellt werden können. Derartige Wagen weisen allerdings in der Regel andere Entleerungsvorrichtungen auf, als bei der DE 36 05 665 C2 dargestellt. Damit die Fahrzeuge die Container an den Drehzapfen oder ähnlichen Anschlägen aufnehmen können, müssen diese Lastträger standardisiert sein, so daß Greifvorrichtungen stets an der gleichen Position ihr Ziel finden können.
Zwar steht auf den Containern meist das Leergewicht (Tara), jedoch kann der Fahrer nur persönlich abschätzen, ob der Behälter zu schwer ist für das Transportfahrzeug. Dadurch ist ein Überladen des Fahrzeuges oberhalb der zugelassenen Nutzlast und auch ein Problem für die Standsicherheit des Fahrzeuges beim Anheben des Behälters gegeben.

Von daher liegt der Erfindung das Problem zugrunde, die Sicherheit derartiger Lasttransporter zu erhöhen und dem Fahrer eine Information über die Nutzlast oder möglicherweise auftretende Sicherheitsgefährdungen zu geben. Zugleich soll ein Überlasten oder gefahrvolles Arbeiten mit dem Lastfahrzeug ausgeschaltet werden.

Das Problem wird erfindungsgemäß durch die Merkmale der Ansprüche 1 und 10 gelöst. Weiterbildungen der Erfindung sind in den Unteransprüchen angegeben.

Die Erfindung geht von der Überlegung aus, daß das Arbeiten mit Schwerlasttransporten durch kleine Unachtsamkeiten des Bedieners zu schwerwiegenden Unfällen führen kann und daher für alle Arbeitspositionen und Verladearbeiten in jedem Fall eine Information des Fahrers erfolgen sollte über die zu bewältigende Nutzlast und auf jeden Fall ein Fehlbedienung auf Grund falscher Einschätzung der Situation durch entsprechende Automatikfunktionen des Fahrzeuges unterbunden werden.

Dazu wird erfindungsgemäß mindestens einer der Hydraulikzylinder der Greifeinrichtung, vorzugsweise der als Schwenkzylinder für die Greifeinrichtung verwendete Hydraulikzylinder mit Schaltern versehen, von denen mindestens einer bei vorbestimmbarem Hub des Kolbens ein Druckerfassungsgerät für den hydraulischen Druck im Zylinder auf einer oder beiden Seiten des Kolbens schaltet und das Druckerfassungsgerät bei Überschreiten eines voreinstellbaren Sollwertes des Druckes eine Sicherheitseinrichtung einschaltet.

Die Sicherheitseinrichtung kann ein optischer oder akustischer Signalgeber für den Fahrer sein oder kann auch eine Klartextanzeige, die zu dem noch farbig leuchtet, umfassen.
Additiv dazu sollte die Sicherheitseinrichtung einen Stützfuß für den Fahrzeugrahmen umfassen, der beim Einschalten aufgrund eines Signales vom Druckerfassungsgerät den Stützfuß in Wirkfunktion fährt. Dies muß nicht automatisch geschehen, sondern kann von dem Fahrer auch manuell ausgelöst werden. Aufgrund der Anzeige kann natürlich der Fahrer auch einen mechanischen Stützfuß einschwenken. in dem Fall müßte er aber die akustische oder optische Anzeige wieder löschen, bevor das Fahrzeug in Funktion gesetzt wird, nachdem sichergestellt ist, daß der Stützfuß auch in Position ist.

Die Schalter am Hydraulikzylinder sind als berührungslose oder kontaktierende Endschalter oder dergleichen ausgebildet und sind gekoppelt mit einer Einrichtung, die beim Hub des Kolbens des Zylinders ebenfalls eine Bewegung ausführt oder enrsprechend geschaltet werden kann und wobei nach vorbestimmbarem Kolbenhub der Endschalter in Wirkfunktion gerät und somit die Drucküberwachung im Zylinder eingeschaltet wird. Die Einrichtung kann als eine zum Hub parallel bewegliche Stange oder sonstige Betätigungseinrichtung sein, z.B. auch eine die entsprechend dem Hub wirkt, wie z.B. ein induktiver Wegaufnehmer, mit oder ohne mechanischer oder fluidischer oder elektrischer Signalgenerierung und Übertragung.

Die Druckerfassungsgeräte im Zylinder können als einfache Druckschalter ausgebildet sein, sitzen dabei vorzugsweise in der Druckleitung zu der Kolbenflächenseite bzw. zu der Kolbenringflächenseite. Eine derartige Anordnung erlaubt es, die Druckschalter zu überwachen.

Anstelle eines einfachen Druckschalters kann jedoch auch das Druckerfassungsgerät mit Mitteln zur Erzeugung eines dem Druck entsprechenden, vorzugsweise proportionalen Signales gestaltet sein, wobei dieses Signal mehrfach Verwendung finden kann. Zunächst einmal kann eine Klartextanzeige an den Fahrer gelangen, um ihm eine Information über die Nutzlast zu geben, die er gerade bewegen will oder es kann eine Waage oder Wiegeeinrichtung, gegebenenfalls elektronisch gesteuert und auch noch registrierend ausgelegt, in Funktion gesetzt werden, damit der Fahrer die Transportmassen zu gleich dokumentieren kann. Wenn dazu standardisierte Lastträger, zum Beispiel Kübel oder Dome, die Papierrollen oder Stahlrollen aufnehmen können, verwendet werden, läßt sich zugleich das Gewicht dieser Lastträger berücksichtigen und als Tara von der aufzunehmenden Last subtrahieren, um so zu der Nutzlast zu gelangen.

insbesondere für Straßentransporte ist es natürlich wichtig, daß der Fahrer weiß, welche Nutzlast er transportiert, um die zulässigen Fahrzeuggewichte, zum Beispiel bei Brücken nicht zu überschreiten.

Im Falle, daß das Druckerfassungsgerät lediglich als Druckschalter ausgebildet ist, kann ein derartiger Druckschalter für das Sperren der Bewegungselemente oder des Hydrauliksystems des Fahrzeuges benutzt werden oder es kann generell das Fahrzeug stillgesetzt werden. In einem solchen Falle müßte mit der Sperre ein Schlüsselschalter verbunden sein, um dem Fahrer zu ermöglichen, nach entsprechender Korrektur der aufzunehmenden Last das Fahrzeug wieder in Bewegung zu setzen oder das Gerät in gewissen Grenzen bis zu einem vorgegebenen Sollwert trotzdem zu bedienen, was für Notfälle manchmal erforderlich sein könnte.

Soweit das Schwerlastfahrzeug beispielsweise als Gerät ähnlich einem Schlacketransporter einzusetzen ist, werden meist auf beiden Seiten des Schwerlastfahrzeuges parallel wirkende Greifeinrichtungen mit einer entsprechenden Heckschwenkeinrichtung für Kübel oder sonstige Lastträger Verwendung finden. Um einer einseitigen Beladung zu begegnen, könnten auf beiden Seiten die Hydraulikzylinder mit entsprechenden Druckerfassungsgeräten und/oder Entschaltern versehen sein. Dies dürfte nur dann erforderlich sein, wenn nicht über entsprechende Gleichlaufelemente, wie Verbinder für die beidseitig gelagerten Greifeinrichtungen oder entsprechende Torsionselemente, die die Last verteilen an dem Fahrzeug, Vorsorge getragen wurde.

Das erfindungsgemäße Fahrzeug kann insbesondere als Schlacketransportfahrzeug für das Aufnehmen von Schlackekübeln auf eine Ladeplattform Verwendung finden, da die heiße Schlacke zu handhaben gefährlich ist und die vorgeschlagenen Kippsicherungseinrichtungen eine Fehlbedienung weitestgehend verhindern.

Anhand einer schematischen Zeichnung soll die Erfindung näher erläutert werden. Es zeigen:
- Figur 1: das erfindungsgemäße Fahrzeug in der Bereitschaftsposition für die Aufnahme eines standardisierten Lastträgers, hier eines Schlackekübels;
- Figur 2: eine vergrößerte schematische Ansicht eines Hydraulikzylinders, der als Kippzylinder benutzt wird;
- Figur 3: der Zylinder gemäß Figur 2 im Schnitt mit zusätzlichen Elementen;
- Figur 4: ein beladenes Schwerlastfahrzeug;
- Figur 5: einen Ausschnitt des Fahrzeuges mit einem Schlackekübel gemäß Figur 4, jedoch in Entleerungsstellungen des Kippzylinders und des Kübels
- Figur 6: eine Ablegeposition für einen Schlackekübel gemäß Figur 4 mit entsprechender Positionierung des Hydraulikzylinders.

Identische oder gleichwirkende Teile sind im folgenden mit gleichen Bezugsziffern versehen.

Zunächst sollen die Funktion des Gesamtgerätes und einiger Einzelteile im Zusammenhang, und dann einige wichtige Deails dargestellt werden.

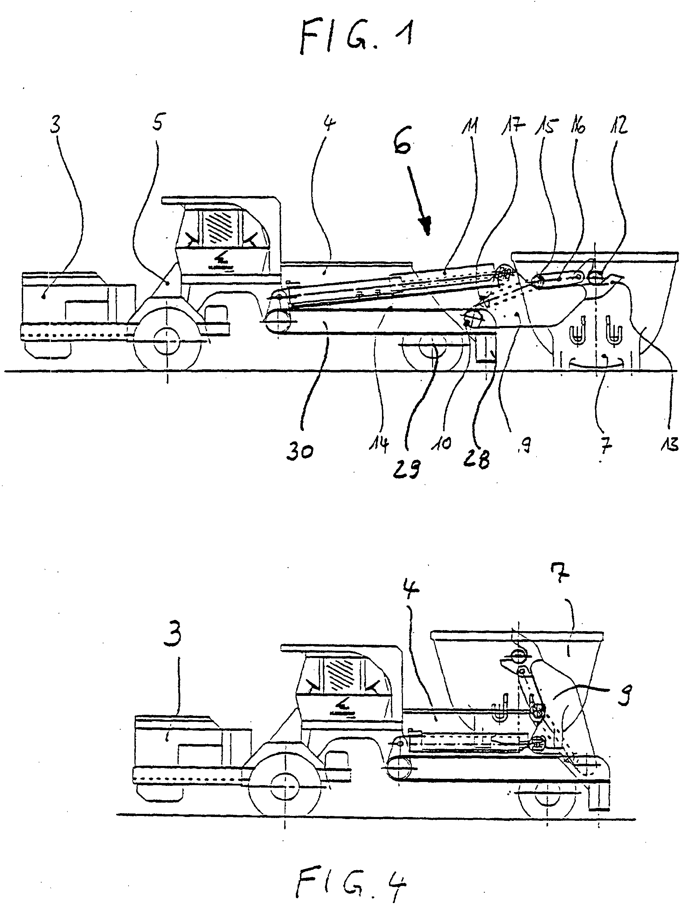

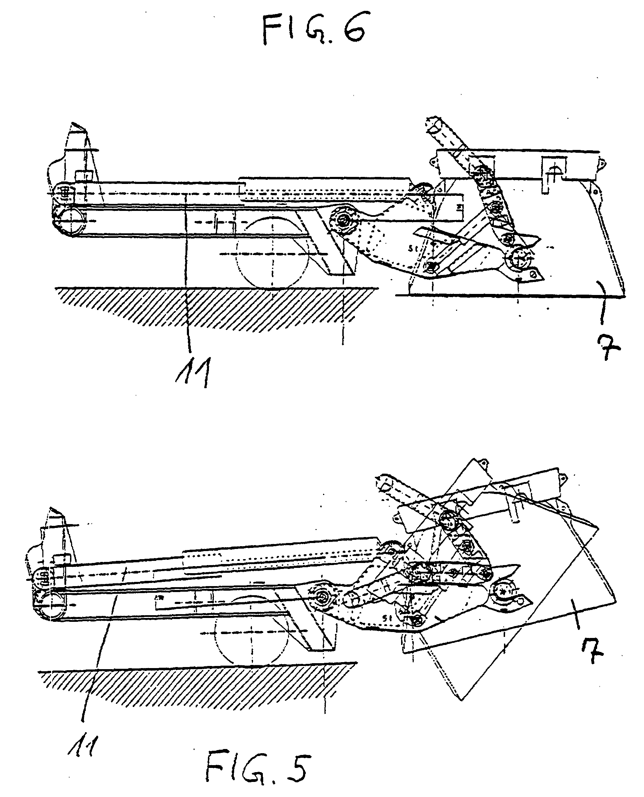

Das Fahrzeug gemäß Figur 1 und 4 besteht im wesentlichen aus dem Triebkopf 3 und dem Lastteil 4. Es ist spezieil für den Transport von flüssigem Material, wie zum Beispiel flüssiger Schlacke oder flüssigem Stahl in Hütten- und Stahlwerken konzipiert und auf die dort vorherrschenden rauhen Einsatzbedingungen hin ausgerichtet.

Der Lastteil ist durch eine Knick-Pendel-Lagerung 5 mit dem Triebkopf verbunden. Auf dem Lastteil befindet sich die Kippeinrichtung 6 für den Schlackenkübel 7. Der Schlackenkübel ist hier nur synonym für andere ähnlich standardisierte Lastträger beschrieben. Andere Lastträger könnten in gleicher Weise mit dem Fahrzeug gehandhabt werden.

Mit Hilfe der hydraulischen Kippeinrichtung 6 wird der Schlackenkübel 7 vom Boden aufgenommen. Anstatt ebenerdig könnte der Schlackenbehälter auch auf einem Podest oder in einer Vertiefung relativ zum Niveau der Fahrstraße des Lastfahrzeuges stehen. Daraus ergeben sich natürlich unterschiedliche Hebelkräfte im hydraulischen Kippsystem bzw. im Hydraulikzylinder selbst, weil die Schwerpunkte zueinander und die Hebelverhältnisse unterschiedlich sind.

Für die Aufnahme des Kübels fährt das Fahrzeug rückwärts mit der abgesenkten Kippeinrichtung 6, wie in Figur 1 dargestellt, an den Kübel und nimmt diesen mit der Kippeinrichtung auf. Sobald die Kippeinrichtung ganz eingefahren ist (Figur 4) kann der Schlackekübel verriegelt werden und durch Ausfahren der Kippeinrichung (Figur 5) entleert werden. Nach dem Entleeren des Kübels kann dieser mit der Kippeinrichtung auch komplett gedreht auf dem Boden abgesetzt werden (Figur 6) oder beim erneuten Befüllen gemäß Figur 1 auf den Boden oder auf die ursprüngliche Wagenposition abgesetzt werden.

Die Kippeinrichtung 6 ist eine geschweißte Stahlkonstruktion, bestehend aus zwei Kipparmen 9 (Figur 1), die durch ein stabiles Torsionsrohr 10 quer zum Fahrzeug miteinander verbunden sind. Das Torsionsrohr stellt hier den Gleichlauf der beidseitigen Kipparme sicher.

Die Kipparme 9 sind am Heck des Fahrzeuges gelagert und werden durch die Hauptkippzylinder 11 eingefahren und ausgefahren. Die Kippeinrichtung wird durch einen Meisterschalter in der Fahrerkabine betätigt.

Zum Aufnahmen des Schlackekübels fährt das Fahrzeug, wie in Figur 1 dargestellt, rückwärts mit ausgefahrenen Kipparmen an den Schlackekübel und nimmt den Kübelzapfen 12 mit der Klaue 13 des Kipparmes auf. Durch Einfahren der Kippzylinder wird der Schlackenkübel auf die Plattform 14 gehoben. Sobald sich der Schlackenkübel in Fahrposition (Figur 4) befindet, kann dieser mit Hilfe des seitlichen Riegelzylinders 15 verriegelt werden. Erst danach ist das Fahrzeug bereit den Schlackenkübel durch Ausfahren der Kippzylinder zu entleeren (Figur 5). Dazu dient insbesondere eine Zusatzkippeinrichtung 16, welche einen Kippwinkel von bis zu 180° (Figur 6) ermöglicht. Damit ist natürlich der Schlackenkübel restlos entleerbar. Diese Zusatzkippeinrichtung besteht selbst aus zwei Hydraulikzylindern, die in den Kipparmen untergebracht sind. Ein Querrohr 17 stellt auch hier den Gleichlauf der Zylinder auf beiden Seiten des Gefäßes sicher.

Da in Abhängigkeit von der Aufnahmehöhe, dies ist der Boden oder eine Vertiefung oder ein Podest, die Belastung des Kippsystems stark schwanken kann, ist der Schlackentransporter mit einer Überlastsicherung ausgestattet. Diese verhindert, daß ein unzulässiges hohes Gewicht oder ein unzulässig hohes Moment aufgenommen werden kann. Die Übertastsicherung kann den verschiedenen Aufnahmepositionen und natürlich auch den beispielsweise variierenden Arten von Lastträgern oder anderen Betriebsbedingungen angepaßt werden.

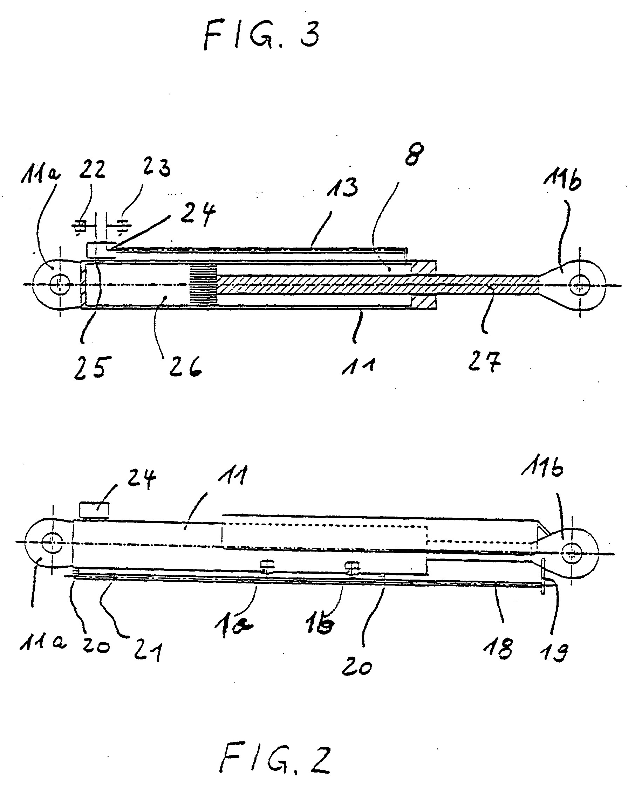

Die Überlastsicherung umfaßt im wesentlichen zwei Endschalter 1a, 1b, die in Wirkverbindung stehen mit zwei Druckerfassungsgeräten 22, 23 gemäß Figur 3. Die Endschalter sind am Kippzylinder so positioniert, daß sie bei bestimmtem Hub des Zylinders geschaltet werden.

Will der Fahrer den gefüllten Schlackekübel ins Fahrzeug bewegen, muß er aus Sicherheitsgründen wissen, ob die vom Fahrzeughersteller vorgeschriebene maximale Nutzlast nicht überschritten wird. In der Ausgangsposition gemäß Figur 1 hat der ausgefahrene Zylinder 11 einen Endschalter 1 b freigeschaltet und damit ein Signal zur Messung des Druckes im Kippzylinder-Ringflächenraum 8 (Figur 3) ausgelöst. Die Freigabe des Signals zur Messung ist somit einer bestimmten Stellung des Kippzylinders 11 und einer bestimmten Stellung des Kipparmes, sowie einer bestimmten Stellung des Schlackenkübels zugeordnet. In diesen vorab zu bestimmenden Stellungen, welche örtlich im Werk bekannt sind, stehen der Druck im Kippzylinder-Ringflächenraum 8 und die von Konstruktionsmassen und der Nutzlast ausgeübten Momente in einer bestimmten Beziehung, d.h. die tatsächliche Nutzlast ist gegebenenfalls additiv zu dem Behältergewicht oder dem Gewicht des sonstigen Lastträgers ist bestimmbar. Diese so ermittelten Werte sind als Eingabewerte in einer Fahrzeugelektronik bearbeitbar und demgemäß der Fahrer über die Nutzlast als solche oder über die mögliche Überschreitung der zulässigen Nutzlast informierbar. Dazu dienen optische, akustische oder Klarschriftsignale. Außerdem kann die Arbeitshydraulik oder das Hydrauliksystem oder deren Elektrobauteile mit einem Signal beaufschlagt werden, so daß sie außer Funktion gesetzt werden. Für bestimmte Fälle ist es jedoch sinnvoll, daß der Fahrer in Eigenverantwortung - bis zu einer bestimmten Grenze - diese Sicherheitssperre mittels Schlüsselschalter überschreiten kann.

Zugleich kann über diese Druckerfassung, in nichtdargestellter Weise, eine Wiegeeinrichtung oder Wage beaufschlagt werden, um so die effektiv transportierte Nutzlast zu dokumentieren.

Alternativ und ergänzend zu dieser Information über die Nutztast wird das System auch für die Überwachung des Aufnahmevorganges des gefüllten Schlackenkübels verwendet. Hier ist additiv sicherzustellen, daß das Fahrzeug die erforderliche Standsicherheit hat. Bei Bedienungsfehlern oder Nichtbeachtung bestimmter Maßregeln kann es vorkommen, daß beim Aufnehmen eines gefüllten Schlackekübels das Fahrzeug um die Hinterachse 29 kippt und der Fahrzeugrahmen 30 (Figur 1) unzulässig belastet wird, was wiederum ein erhebliches Sicherheitsrisiko für den Fahrer darstellt.

Zur Vermeidung der Fehlbedienung wird das zuvor beschriebene Warnsignal so gestaltet, daß dem Fahrer seine Fehlbedienung angezeigt wird oder die weitere Bedienung des Fahrzeuges blockiert. Sodann hat der Fahrer die Möglichkeit eine Abstützvorrichtung 28 an der Heckseite des Fahrzeuges manuell zu montieren oder eine vorhandene Abstützvorrichtung in Wirkfunktion zu setzen. Bei entsprechender Kopplung der Signale von den Druckerfassungsgeräten kann natürlich die Abstützeinrichtung auch automatisch in Funktion gefahren werden, damit der Ladevorgang schneller abläuft und eine fehlerhafte Anbringung der Abstützeinrichtung, zum Beispiel eines hydraulischen Stützfußes unter dem Fahrzeugrahmen hinter der Radachse, ausgeschaltet wird. Die Druckniveaus der Druckerfassungsgeräte, zum Beispiel einfacher Druckschalter werden sinnvollerweise so hoch gewählt, daß unterhalb dieses Niveaus bestimmte Arbeiten ohne Ausfahren eines Stützfußes möglich sind, zum Beispiel das Handling eines leeren Schlackenkübels (Figur 6), ohne daß jedoch die erforderliche Standsicherheit während des Bewegens des leeren Kübels gefährdet wird.

Die Meßstellen bzw. die Anordnungspunkte für die Endschalter am Hydraulikzylinder und auch die Anordnung des Druckerfassungsgerätes auf der Kolbenstangenseite sollen bei der in den Figuren dargestellten Anordnung für diese Zwecke gleich sein. Somit hat dieses System zum einen die Funktion der Information über die zulässige oder maximale Nutzlast, als auch die Funktion des Verhinderns der Überlastung des Fahrzeuges beim Aufnehmen von gefüllten Schlackekübeln oder ähnlich standardisierten Lastträgem.

Auch beim Entleeren des gefüllten Schlackekübels 7 bzw. vor dem Absetzen des gefüllten Schlackenkübels ist es erforderlich eine Abstützvorrichtung 28 in Wirkfunktion zu bringen, weil auch bei diesen Bewegungsvorgängen die Standsicherheit gefährdet werden könnte und das Fahrzeug, wie auch beim Aufnehmen des Schlackenkübels kippen oder unzulässig belastet werden könnte.

Um eine solche Fehlbedienung zu vermeiden. wird auch auf der Kippzylinder-Kolbenseite 26 ein Druckerfassungsgerät 22 montiert, so daß auch über die Druckverhältnisse im System in diesen Bewegungsfällen eine Information vorliegt. Hierbei wird wieder die entsprechende Fahrzeuggeometrie bzw. die Hubstellung des Zylinders 11 (Figur 1) berücksichtigt und in diesem Falle über den Endschalter 1a (Figur 2) das Druckerfassungsgerät in Funktion gesetzt.

Das zuvor erwähnte optische bzw. akustische Warnsystem kann in ähnlicher Weise benutzt werden mit alternativen Signalen auch dem Fahrer in diesen Fällen die mögliche Fehlfunktion anzuzeigen.

Die Funktionen des Fahrzeuges sind im Prinzip leicht erkennbar aus der Figur 4 mit der Position für die Straßenfahrt, der Figur 1 mit der Position für das Aufnehmen des Schlackekübels, der Figur 5 mit den Entleerungspositionen des Schlackekübels und der Figur 6 mit der möglichen Überkopfablegeposition des entleerten Schlackebehälters. Die Details der Figuren 2 und 3 sollen im folgenden kurz dargestellt werden. Der Hydraulikzylinder oder Kippzylinder 11 wird mit dem Auge 11a an dem Fahrzeug, hier dem Lastteil 4 (Figur 1) angelascht, während das Zylinderauge 11b an der Kippeinrichtung 6 bzw. den Kipparmen 9 angekoppelt wird. An dem Zylindern 11 ist ein Rohr 21 mittels Befestigungen 20 parallel angebracht, in dessen Inneren eine Stange 18, welche mit dem Auge 11 b via Befestigung 19 gekoppelt ist, verschiebbar gelagert. Zwei Endschalter 1a und 1b werden für die verschiedenen Bewegungsfunktionen unter Berücksichtigung der jeweiligen Momente beim Betrieb so am Zylinder positioniert, daß sie das Ende der mit der Kolbenstange 27 verschieblichen Stange 18 erfassen können. Die Endschalter generieren aus der Erfassung des Stangenendes eine Signal und beaufschlagen damit die Druckerfassungsgeräte 22, 23 (Figur 3).

Diese Figur 3 zeigt den Zylinder gemäß Figur 2 im Schnitt mit dem Druckraum 26 und dem Ringraum 8 auf der Kolbenstangenseite. Über Druckleitungen 25 bzw. 13 sind nahe dem Wegeventil 24 die Druckschalter 22, 23 an die Druckräume gekoppelt.
Diese Druckschalter 22, 23 können nicht nur als Einfachschalter sondern als, zum Beispiel Proportionaisignalgeber für eine Anzeige benutzt werden, die proportional zur Nutzlast ist. Diese Anzeige kann auch Teile einer Wiegeeinrichtung sein.

## Patentansprüche

1. Schwerlastfahrzeug mit einer Greifeinrichtung zum Aufnehmen und Bewegen eines standardisierten Lastträgers, welche durch Hydraulikzylinder betätigbar ist und eine während des Bewegens des Lastträgers wirkende Kippsicherung für das Fahrzeug, **dadurch gekennzeichnet, daß** mindestens einer der Hydraulikzylinder (11) mit Schaltern (1a, 1b) versehen ist, von denen mindestens einer bei vorbestimmbarem Hub des Kolbens ein Druckerfassungsgerät (22, 23) für den hydraulischen Druck im Zylinder auf einer oder beiden Seiten (8. 26) des Kolbens schaltet und das Druckerfassungsgerät bei Überschreiten eines voreinstellbaren Sollwertes des Druckes eine Sicherheitseinrichtung einschaltet.

2. Schwerlastfahrzeug nach Anspruch 1, **dadurch gekennzeichnet, daß** die Sicherheitseinrichtung ein optischer oder akustischer Signalgeber ist.

3. Schwerlastfahrzeug nach Anspruch 1 oder 2, **dadurch gekennzeichnet, daß** die Sicherheitseinrichtung einen Stützfuß (28) für den Fahrzeugrahmen (30) umfaßt, der beim Einschalten in Wirkstellung fahrbar ist.

4. Schwerlastfahrzeug nach einem der vorhergehenden Ansprüche, **dadurch gekennzeichnet, daß** die Sicherheitseinrichtung eine Sperre für das Hydrauliksystem ist.

5. Schwerlastfahrzeug nach einem der vorhergehenden Ansprüche, **dadurch gekennzeichnet, daß** der Schalter als Endschalter (1a, 1b) ausgebildet ist, der von einer dem Hub der Kolbenstange (27) entsprechend wirkenden Betätigungseinrichtung (18) schaltbar ist.

6. Schwerlastfahrzeug nach einem der vorhergehenden Ansprüche, **dadurch gekennzeichnet, daß** das Druckerfassungsgerät (22, 23) als Druckschalter ausgebildet und in einer zu der jeweiligen Seite des Kolbens führenden Druckleitung (13, 25) angeordnet ist.

7. Schwerlastfahrzeug nach einem der vorhergehenden Ansprüche, **dadurch gekennzeichnet, daß** die Sperre mittels Schlüsselschalter betätigbar ist.

8. Schwerlastfahrzeug nach einem der vorhergehenden Ansprüche, **dadurch gekennzeichnet, daß** das Druckerfassungsgerät mit Mitteln zur Erzeugung eines dem Druck proportionalen Signales für eine Wiegeeinrichtung und mit einer Wiegeeinrichtung ausgestattet ist.

9. Schwerlastfahrzeug nach einem der vorhergehenden Ansprüche, **dadurch gekennzeichnet, daß** die Greifeinrichtung (6) eine Heckschwenkeinrichtung für Schiackekübel (7) oder Lastträger, welche an zweiseitigen Anschlägen (12) greifbar sind, umfaßt.

10. Schwerlastfahrzeug für Schlacketransport mit einer Ladeplattform (14) für Schlackekübel (7), umfassend eine Greifeinrichtung und eine Kippsicherung gemäß Anspruch 1.

## Claims

1. Heavy load vehicle with a gripping device for picking up and moving a standardized load carrier, which can be actuated by means of hydraulic cylinders, and a tilting type safety device for the heavy load vehicle, which acts during the motion of said load carrier,
**characterized in that** at least one of said hydraulic cylinders (11) is provided with switches (1a, 1b), wherein at least one of which turns on a pressure detector (22, 23) for the hydraulic pressure within said cylinder on one side or either side (8, 26) of the piston at a predeterminable stroke of said piston, and said pressure detector connects a safety device upon exceeding a preset desired value of the pressure.

2. Heavy load vehicle as claimed in claim 1 **characterized in that** said safety device is an optical signal transmitter or acoustic signal transmitter.

3. Heavy load vehicle as claimed in claims 1 or 2 **characterized in that** said safety device includes a support device (28) for the vehicle frame (30) which is movable into the active position during connecting of said safety device.

4. Heavy load vehicle as claimed in any one of the preceding claims **characterized in that** said safety device provides a lock for the hydraulic system.

5. Heavy load vehicle as claimed in any one of the preceding claims **characterized in that** said switch is configured as a limit switch (1a, 1b) which is switchable by an actuating device (18) being effective in accordance with the stroke of the piston rod (27).

6. Heavy load vehicle as claimed in any one of the preceding claims **characterized in that** said pressure detector (22, 23) is configured as a manometric switch and arranged within a pressure pipe (13, 25) leading to the respective side of said piston.

7. Heavy load vehicle as claimed in any one of the preceding claims **characterized in that** said lock can be actuated by means of a key-operated switch.

8. Heavy load vehicle as claimed in any one of the preceding claims **characterized in that** said pressure detector is equipped with means to provide a signal in proportion to pressure for a weighing device, and with a weighing device.

9. Heavy load vehicle as claimed in any one of the preceding claims **characterized in that** said gripping device (6) includes a rear slewing means for slag buckets (7) or load carriers which can be gripped on two-sided sling means (12).

10. Heavy load vehicle for the transportation of slag with a loading platform (14) for slag buckets (7) comprising a gripping device and a tilting type safety device according to claim 1.

## Revendications

1. Véhicule pour charges lourdes avec un dispositif d'accrochage pour la saisie et le déplacement d'un porte-charge standardisé qui peut être actionné par des vérins hydrauliques et un dispositif de sécurité antisurcharge pour le véhicule agissant lors du déplacement du porte-charge, **caractérisé en ce qu'**au moins un des vérins hydrauliques (11) est muni de commutateurs (1a, 1b) dont au moins un commute, pour une course du piston pouvant être prédéterminée, un capteur de pression (22, 23) pour la pression hydraulique dans le vérin sur l'un des côtés ou sur les deux côtés (8, 26) du piston et en ce que le capteur de pression met en route un dispositif de sécurité en cas de dépassement d'une valeur théorique préréglable de la pression.

2. Véhicule pour charges lourdes selon la revendication 1, **caractérisé en ce que** le dispositif de sécurité est un transmetteur de signaux optiques ou acoustiques.

3. Véhicule pour charges lourdes selon la revendication 1 ou 2, **caractérisé en ce que** le dispositif de sécurité comprend un pied d'appui (28) pour le châssis du véhicule (30) qui peut être déplacé en position active lors de la mise en route.

4. Véhicule pour charges lourdes selon l'une des revendications précédentes, **caractérisé en ce que** le dispositif de sécurité constitue un verrouillage pour le système hydraulique.

5. Véhicule pour charges lourdes selon l'une des revendications précédentes, **caractérisé en ce que** le commutateur est réalisé comme commutateur de fin de course (1a, 1b) qui peut être actionné par un dispositif d'actionnement (18) agissant en fonction de la course de la tige de piston (27).

6. Véhicule pour charges lourdes selon l'une des revendications précédentes, **caractérisé en ce que** le capteur de pression (22, 23) est réalisé sous forme de manocontact et est disposé dans une conduite sous pression (13, 25) conduisant au côté respectif du piston.

7. Véhicule pour charges lourdes selon l'une des revendications précédentes, **caractérisé en ce que** le verrouillage peut être actionné au moyen d'un interrupteur à clef.

8. Véhicule pour charges lourdes selon l'une des revendications précédentes, **caractérisé en ce que** le capteur de pression est muni de moyens pour générer un signal proportionnel à la pression pour un dispositif de pesage ainsi que d'un dispositif de pesage.

9. Véhicule pour charges lourdes selon l'une des revendications précédentes, **caractérisé en ce que** le dispositif d'accrochage (6) comprend un dispositif pivotant arrière pour des bennes à scories (7) ou des porte-charges qui peuvent être accrochés à des ergots (12) disposés des deux côtés.

10. Véhicule pour charges lourdes pour le transport de scories avec une plate-forme de chargement (14) pour des bennes à scories (7) comprenant un dispositif d'accrochage et un dispositif de sécurité antisurcharge selon la revendication 1.
